Europäisches Patentamt

European Patent Office

Office européen des brevets

(11) Publication number: 0 460 509 A2

# EUROPEAN PATENT APPLICATION

(21) Application number: 91108713.8

(22) Date of filing: 28.05.91

(51) Int. Cl.⁵: G06K 7/10

(30) Priority: 02.06.90 GB 9012343

(43) Date of publication of application:
11.12.91 Bulletin 91/50

(84) Designated Contracting States:
CH DE FR GB LI

(71) Applicant: PRESTEK LIMITED
14 Highlands Science Park, University
Boulevard
Nottingham NG7 2QP(GB)

(72) Inventor: Buckby, Stephen
8 Denewood Avenue, Bramcote Hills,
Nottingham NG9 3EU(GB)

(74) Representative: Lucking, David John et al
FORRESTER & BOEHMERT
Widenmayerstrasse 4
W-8000 München 22(DE)

(54) Binary bar code reader.

(57) Apparatus for reading a binary bar code (10) which comprises a series of generally parallel thick (a,d) and thin (b,c) bars, the apparatus comprising scanning means (12) to scan the bar code (10) to provide a signal to a control means (17), the control means (17) being adapted to interpret the signal to provide a measure of the width of each of the bars (a-d) of the read binary bar code (10) and to compare the measured widths of each of the bars severally with reference bar width information stored in a memory (18) thereby to determine the read bar code, the control means (17) further comprising means to verify whether the bar code read (10) is the same as a reference bar code (20), display means (25) to display to an operator read bar code width information, operator input means (26) to enable the reference bar width information stored in the memory (18) to be changed by the operator.

FIG 1

This invention relates to a binary bar code reader and more particularly, but not exclusively, to a binary bar code reader for reading binary bar codes which are used in the pharmaceutical industry to identify packaging in which pharmaceutical products are packed.

Known binary bar code readers comprise a scanner for scanning a binary bar code, the scanner producing a signal which is processed by analogue and digital circuits, to verify whether the image read by the binary bar code reader is the same as an expected bar code.

The ability of the binary bar code reader to recognise the read bar code as the expected bar code, is dependant, amongst other things, upon the print quality of the bar code being read. In the event of the binary bar code reader not recognising a valid bar code as the expected bar code, present binary bar code readers provide no detailed indication to an operator as to why the read bar code failed to be recognised, and provide little scope for the operator to make adjustments to ensure that valid bar codes are recognised.

According to the invention we provide an apparatus for reading a binary bar code which comprises a series of generally parallel thick and thin bars, the apparatus comprising scanning means to scan the bar code to provide a signal to a control means, the control means being adapted to interpret the signal to provide a measure of the width of each of the bars of the read bar code and to compare the measured widths of the bars severally with reference bar width information stored in a memory, thereby to determine the read bar code, the control means further comprising means to verify whether the bar code read is the same as a reference bar code, display means to display to an operator read bar code width information, operator input means to enable the reference bar width information stored in the memory to be changed by the operator.

By virtue of the display means and the operator input means, the apparatus can be adjusted accurately to read a binary bar code where, for example, the printing of the bar code does not conform to a fixed calibration.

Further, by virtue of the display means any adjustment of the position of the scanning means which is required to improve the ability of the apparatus to read the bar codes, can be more easily effected.

The invention will now be described with reference to the accompanying drawings, in which:

FIGURE 1 is an illustrative view of the scanner of a binary bar code reader in accordance with the invention, reading a binary bar code on a product,

FIGURE 2 is a schematic illustration of an apparatus in accordance with the invention.

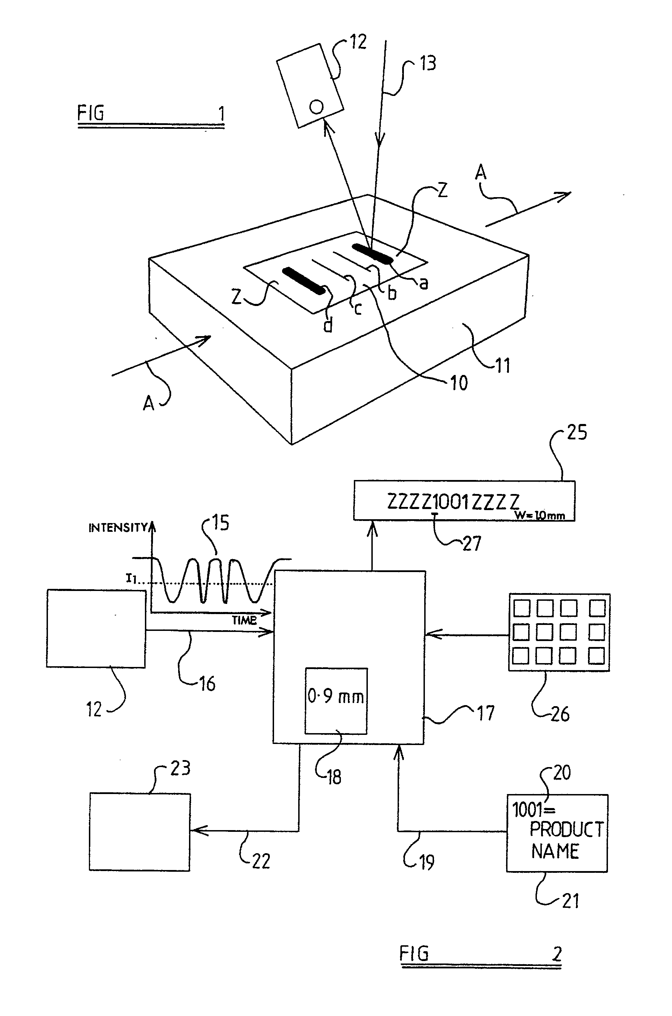

Referring to the drawings, there is shown a binary bar code 10 applied as a sticker, or simply printed on, a product 11, such as a pharmaceutical product, which is carried by a conveyor in the direction of arrows A in figure 1.

A scanner 12 is arranged to receive light reflected from the binary bar code 10 as the binary bar code 10 passes beneath a focused beam of light 13. The scanner 12 and a light generator to generate the focused beam of light may be provided in a common housing, or in separate housings as required.

In another example, not shown, instead of traversing the bar code 10 past the scanner 12, the scanner 12 may be moved and the bar code 12 held stationary. In both cases, some relative movement is required between the scanner 12 and bar code 10 to enable the scanner to scan across the bar code 10.

In the present example, it can be seen that the binary bar code 10 comprises four generally parallel bars side by side, there being in the example shown, two thin bars indicated at b and c between two thicker bars indicated at a and d. The thick bars a,d, each represent the binary number "1" and the thin bars b,c, each represent the binary number "0" as is well known in the art, so that the binary bar code 10 is "1001".

Of course, as will be well known to those skilled in the art, the binary number system used on pharmaceutical bar codes is not true binary, in that each "0" integer is actually to be a "I" and each "I" integer is actually a "1". Hence the "binary" number "1001" actually represents number $(2x2^3) + (1x2^2) + (1x2') + (2x2^0) = 24$.

Of course in another example, the binary bar code 10 may comprise more (or less) than four bars a-d with thick and thin bars arranged generally parallel and side by side to represent any appropriate binary number. A unique binary number would be applied to a particular product so that the product 11 can be identified for example, by reading the binary bar code 10.

The scanner 12 generates an analogue signal of the intensity of the light received by reflection from the binary bar code 10 as the bar code 10 is traversed relative to the scanner 12, as indicated at 15, in figure 2. The signal is fed along a line 16 to a control means 17 which may comprise conveniently, one or more programmed and programmable microprocessors. The control means 17 is arranged to interpret the signal 15 to recognise the read binary bar code 10 by determining a measure of the width of each of the individual bars a-d of the binary bar code 10 to identify which of the bars a-d are thick, and which of the bars are thin. The control means 17 achieves this by measuring in the signal 15, the time between reoccurrence of a fixed intensity level I1 for each of the bars, and compares the values of the widths of each of the bars a-d with a single reference threshold width which is stored in a memory 18 of the control means 17. Any bar of the bar code 10 having a width greater than the reference width (which is 0.9 mm in this particular example) is interpreted by the control means 17 to be a thick bar a,d, whilst any bar having a width less than the reference width 0.9 mm is taken to be a thin bar b,c.

In order to obtain a measure of the actual widths of the bars a-d the speed at which the bars traverse past the scanner 12 has to be related to the time taken for the particular bars to pass the scanner 12. The scanner 12 would in practice have two light sensors spaced apart in the direction of arrow A by a known distance. Hence the time taken for, say a leading edge of a bar, to move from beneath one scanner sensor to the other, will give a measure of the speed of the product 11.

Thus the output from either of the scanner sensors may be used to determine the actual widths of the bars a-d.

Such an arrangement is well known to those skilled in the art and hence further description is not deemed necessary.

In another example, a unique reference width for each of the individual bars a-d could be contained in memory 18, with the width of each bar being measured, being compared with its corresponding reference width in the memory 18.

To facilitate the control means 17 determining the read binary bar code 10, a quiet zone Z in which there is no printing, is provided either side of the bar code 10. The control means 17 is able to recognise when the binary code 10 starts and ends, by recognising the quiet zones Z as hereinafter described.

Thus the control means 17 is able to read the binary bar code 10. The read bar code 10 is then compared by the control means 17 with a reference bar code 20 which may be stored in another memory, or in the example shown, downloaded to the control means 17 along a line 19 from a remote data store 21, to verify whether the read binary bar code 10 is the same as the reference bar code 20.

In the event that the read bar code 10 is determined not to be the same as the reference bar code 20, the control means 17 may simply display a message to an operator, or as in the example shown, provide a signal along a line 22 to a reject mechanism 23 which causes the product 11 to be removed from the conveyor. Alternatively, the signal from the control means 17 sent along line 22 may be used to halt the conveyor on which the product 11 is conveyed.

If desired, the control means 17 may be configured to reject individual products 11 which carry bar codes which are not verified as being the same as the reference bar code 20, but in the event of a set number of subsequent rejections, e.g. ten, the control means 17 may cause the conveyor to halt and an audible and/or visible warning to be given to an operator.

It will be appreciated that if the bar code 10 was printed with each of the thick bars a,d, having a width of less than 0.75 mm, the product 11 would be rejected because the read bar code 10 would be interpreted to be "0000" and not "1001".

Further, if the thin bars, b,c, were printed each with a width greater than 0.75 mm, the product would be rejected becuse the read bar code 10 would be interpreted to be "1111" rather than "1001".

Another reason why the binary bar code reader apparatus would be unable correctly to read the bar code 10, would be for example, the mispositioning of the scanner 11 and/or the generator of the focused beam of light 13.

Yet another reason why the bar code 10 may not successfully accurately be read, may be the presence of printing on the product 11 on one or both sides of the read bar code 10, which makes it impossible for the control means 17 to determine when the bar code 10 starts and finishes.

Typically a quiet zone Z of about 5 mm would be required either side of the bar code 10 which is a gap considerably greater than the actual widths between the bars a-d of the bar code 10.

In accordance with the invention, the apparatus comprises a display means 25 which is capable of displaying the read bar code, and the values of the actual widths of each of the bars a,b,c,d, and by the quiet zones Z read by the binary bar code reader.

Thus an operator can make adjustments to the position of the scanner 12 and the generator of the focused beam of light 13 until the display means 25 displays the correct binary bar code 10. To achieve this, the operator may need to adjust the threshold value of the reference width (0.9 mm) stored in memory 18, via an operator input means 26.

When the display means 25 is displaying the correct read bar code 10, the display means 25 can be arranged to display to the operator the measured values of the actual widths of each of the bars a-d by positioning a cursor 27 beneath each of the binary numbers of the read binary bar code 10, in turn. In the example shown, it can be shown that the cursor 27 is positioned below the first "1" of the binary number, and that the display means 25 is displaying that the width of the bar a is 1.0 mm.

Further, the quiet zones Z of the bar code are indicated by a series of Z's on the display means 25.

The widths of any of the bars a-d and of the quiet zones Z either side of the bar code 10 can be displayed by the display means by the operator locating the cursor 27 below the appropriate binary number of the read bar code or quiet zone Z.

The operator input means 26 comprises a key pad with a plurality of keys which may be operated to change the value of the reference width in memory 18, to move the cursor 27, and to provide other control operations such as adjustment of the widths of the quiet zones Z either side of the bar code 10, required for the control means 17 to recognise the start and finish of the bar code 10.

In an ideal situation, the bars a-d of the bar code 10, would be printed with the thick bars a and d having at least twice the widths of the thin bars b and c. As mentioned above however, provided that the binary bar code reader apparatus has sufficient resolution to distinguish between thick and thin bars, potentially the thick bars may be distinguished from the thin bars even when the bars of the bar code 10 are not ideally printed.

The operator may determine the average of the measured widths of each of the thick bars a,d, of the binary bar code 10 and the average of the measured widths of each of the thin bars b,c, of the binary bar code 10, and then insert the mean value of the average widths of the thick and thin bars as the reference width in memory 18.

In this way, the apparatus can be adjusted to read binary bar codes 10, and verify whether the bar code 10 is the same as reference bar code 20 even when the binary bar code 10 is not ideally printed.

Without the ability for such adjustment of the reference width in memory 18, the apparatus would only be capable of reading binary bar codes 10 which conform to a calibration of the apparatus.

Various modifications may be made without departing from the scope of the invention.

The display means 25 may display the read binary bar code, and any other information in any desired format. For example, the measured widths of each of the binary numbers of the binary bar code 10 may be displayed simultaneously instead of there being a cursor 27 and only one width at a time being displayed as in the example indicated.

The data store 21 may comprise a cross reference between reference binary bar code 20 and the product name, or alternatively, the reference binary number 20 may be stored in an auxiliary memory of the control means 17.

Where the memory 18 contains reference width information for each of the individual bars a-d of the bar code 10, the individual reference widths may be adjustable by the operator input means 26.

If desired, at least some of the bars a-d, may be printed in different colours to one another, such that the system is a multi colour binary bar code reader apparatus. Multi-colour binary bar codes 10 are used so that any label or the like printed on the product 11 can be verified as having been printed with all the essential colours of the label, in addition to a product 11 being identified.

The features disclosed in the foregoing description the following claims or the accompanying drawings, expressed in their specific forms or in terms of a means for performing the disclosed function, or a method or process for attaining the disclosed result, or a class or group of substances or compositions, as appropriate, may, separately or in any combination of such features, be utilised for realising the invention in diverse forms thereof.

**Claims**

1. An apparatus for reading a binary bar code (10) which comprises a series of generally parallel thick and thin bars (a-d), the apparatus comprising scanning means (12) to scan the bar code (10) and to provide a signal (15) to a control means (17), the control means (17) being adapted to interpret the signal (15) to provide a measure of the width of each of the bars of the read bar code (10) and to compare the measured widths of the bars (a-d) severally with reference bar width information stored in a memory (18), thereby to determine the read bar code (10), the control means (17) further comprising means to verify whether the bar code read is the same as a reference bar code (20), characterised in the provision of display means (25) which display to an operator read bar code bar width information, and operator input means (26) to enable the reference bar width information stored in the memory (18) to be changed by the operator.

2. An apparatus according to claim 1 characterised in that a light generator is provided to generate a focused beam of light (13) which is directed onto the binary bar code (10), the scanning means (12) receiving light reflected from the binary bar code (10).

3. An apparatus according to claim 1 or claim 2 characterised in that means are provided to traverse the bar code (10) relative to the scanning means (12), the signal (15) from the scanning means (12) comprising an analogue of the intensity of light received by the scanning means (12) across the bar code (10), the control means (17) providing a measure of the width of each of the individual bars (a-d) of the read binary bar code (10) by determining the times between when the signal (15) is at a selected intensity level, and relating the time to the speed at which the binary bar code (10) is traversed relative to the scanning means (12).

4. Apparatus according to any one of claims 1 to 3 characterised in that the measures of each of the widths of the bars (a-d) are compared with a single reference width stored in the memory (18), the value of the reference width being changeable by the operator to a selected value by the operator input means (26), any bar (a-d) having a measure of width greater than the reference width being interpreted by the control means (17) to be a thick bar (a,d) and any bar having a measure of width less than the reference width being interpreted by the control means (17) to be a thin bar (b,c).

5. An apparatus according to any one of claims 1 to 4 characterised in that the reference bar code (20) is stored in a further memory of the control means (17).

6. Apparatus according to any one of claims 1 to 5 characterised in that the reference bar code (20) is downloaded to the control means (17) from a remote data store (21).

7. Apparatus according to any one of claims 1 to 6 characterised in that the display means (25) is able to display to an operator the measures of the widths of each of the individual bars (a-d) of the read bar code (10).

8. Apparatus according to any one of claims 1 to 7 characterised in that the display means (25) is adapted to display a measure of the widths of quiet zones (Z) at the beginning and end of the binary code (10) being read.

9. An apparatus according to any one of claims 1 to 8 characterised in that a width of quiet zone (Z) required at either side of the read binary bar code (10) is programmable via the operator input means (26) into a memory of the control means (17).

10. Apparatus according to any one of claims 1 to 9 wherein the display means (25) is adapted to display to an operator the reference bar width information stored in the memory (18).

FIG 1

FIG 2